# EUROPEAN PATENT APPLICATION

(11) **EP 4 407 905 A1**
(43) Date of publication of application: **31.07.2024**
(21) Application number: 22891740.7
(22) Date of filing: 17.10.2022
(51) Int. Cl.: H04L 1/00, H04N 19/46

(54) **DATA TRANSMISSION METHOD AND COMMUNICATION APPARATUS**

(30) Priority: 11.11.2021 CN 202111331519
(71) Applicant: Huawei Technologies Co., Ltd., Shenzhen, Guangdong 518129 (CN)
(72) Inventor: LI, Jiahui, Shenzhen, Guangdong 518129 (CN); MA, Mengyao, Shenzhen, Guangdong 518129 (CN); LIN, Wei, Shenzhen, Guangdong 518129 (CN); GU, Jiaqi, Shenzhen, Guangdong 518129 (CN); TANG, Zihan, Shenzhen, Guangdong 518129 (CN); BI, Xiaoyan, Shenzhen, Guangdong 518129 (CN); YAN, Min, Shenzhen, Guangdong 518129 (CN)
(74) Representative: Pfenning, Meinig & Partner mbB
(86) International application number: PCT/CN2022/125585
(87) International publication number: WO 2023/082943

(57) **Abstract**

This application provides a data transmission method and a communication apparatus. In the method, physical-layer to-be-coded data of a transmit end may support lossy or lossless transmission, channel coding, a coding mode in which compression and channel coding are separated, and a coding mode in which compression and channel coding are combined. Therefore, physical layer coding performed by the transmit end may support a more flexible data transmission mode. In addition, the physical-layer to-be-coded data of the transmit end may be directly sent after being compressed and coded in a supported coding mode at a physical layer, and there is no longer a case in which the physical-layer data is sent to an application layer for processing due to some reasons (for example, to adapt to a limited bandwidth allocated by a system or match a capability of reconstructing distorted data by a receive end) and then sent after channel coding at the physical layer is performed. Therefore, in this application, a data sending path is shorter, and a sending delay can be reduced.

## Description

This application claims priority to Chinese Patent Application No. 202111331519.4, filed with the China National Intellectual Property Administration on November 11, 2021 and entitled "DATA TRANSMISSION METHOD AND COMMUNICATION APPARATUS", which is incorporated herein by reference in its entirety.

### TECHNICAL FIELD

This application relates to the field of wireless communication technologies, and more specifically, to a data transmission method and a communication apparatus.

### BACKGROUND

In many existing communication systems, for example, a cellular system and a wireless fidelity (wireless fidelity, Wi-Fi) system, source coding and channel coding are separated. A transmit end first performs source coding on source data, and then performs channel coding on data obtained after source coding. Source coding is usually performed at an application layer, and channel coding is usually performed at a physical layer.

However, this solution of separating source coding and channel coding has many disadvantages. For example, only lossless transmission is supported. For some data that can support lossless transmission to some extent, flexibility is poor, and overall performance of data transmission is affected. For another example, for some physical-layer data, to adapt to a limited bandwidth allocated by the system, the physical-layer data needs to be first transmitted to the application layer for processing, and then transmitted back to the physical layer for channel coding before being sent. A delay is high, and a requirement of a communication scenario with a low delay requirement cannot be met.

### SUMMARY

This application provides a data transmission method and a communication apparatus, to improve data transmission performance, for example, support lossless or lossy data transmission, and reduce a transmission delay.

According to a first aspect, a data transmission method is provided. The method includes:
A terminal device receives first indication information, where the first indication information indicates a first coding mode, and the first coding mode is one of the following coding modes: a channel coding mode, a coding mode in which compression and channel coding are separated, and a coding mode in which compression and channel coding are combined;
the terminal device receives second indication information, where the second indication information indicates a loss degree; and
the terminal device processes downlink data or to-be-coded uplink data based on the first indication information and the second indication information.

In this application, to-be-coded data of a transmit end is physical-layer to-be-coded data of the transmit end or data on which physical layer coding is to be performed. That is, the to-be-coded data is specific to a physical layer, and whether a coding operation is performed at another layer is not limited. Optionally, the to-be-coded data may be physical-layer native data, or may be data from an application layer of the transmit end. Optionally, the to-be-coded data may be data that is obtained after source coding at an application layer of the transmit end, or data on which no source coding at an application layer is performed. This is not limited.

In the technical solutions of this application, the to-be-coded data of the transmit end (for example, downlink data of a network device or uplink data of the terminal device) may support lossy or lossless transmission, channel coding, the coding mode in which compression and channel coding are separated, and the coding mode in which compression and channel coding are combined. Therefore, physical layer coding performed by the transmit end may support a more flexible data transmission mode. For example, for some physical-layer data that has a specific error tolerance capability, lossy transmission may be supported to some extent, to more flexibly adapt to different transmission requirements.

In addition, the to-be-coded data of the transmit end may be directly sent after being compressed and coded in a supported coding mode at the physical layer, and does not need to be sent to the application layer for processing and then sent after channel coding at the physical layer is performed. Therefore, a data sending path is shorter, and a sending delay can be reduced. In view of the foregoing advantages, the data transmission method provided in this application may improve data transmission performance.

With reference to the first aspect, in some implementations of the first aspect, that the second indication information indicates a loss degree includes: the second indication information indicates "lossy" or "lossless"; or the second indication information indicates a distortion degree.

With reference to the first aspect, in some implementations of the first aspect, that the terminal device processes to-be-coded uplink data based on the first coding mode and the loss degree includes:
The terminal device codes the to-be-coded uplink data based on the first coding mode to obtain coded data; and
the terminal device encrypts the coded data.

In this implementation, the terminal device sets the encryption operation to be performed after physical layer coding (including rate matching), to ensure that a bit probability distribution characteristic of the to-be-coded data is not damaged before physical layer coding is performed, so as not to affect transmission performance. In addition, the encryption operation ensures data transmission security.

In addition, because the bit probability distribution characteristic of the to-be-coded data is not damaged, higher transmission efficiency may be implemented.

With reference to the first aspect, in some implementations of the first aspect, that the terminal device encrypts the coded data includes:
The terminal device encrypts the to-be-coded uplink data when the to-be-coded uplink data is physical-layer native data of the terminal device, or when the to-be-coded uplink data is from an upper layer of a physical layer of the terminal device, and an encryption function of a packet data convergence protocol PDCP layer is not enabled.

In this implementation, the terminal device encrypts, at the physical layer, the physical-layer native data or the data that is from the application layer and that is not encrypted at the PDCP layer, to ensure transmission security of the physical-layer native data, and improve transmission security of the data that is not encrypted at the PDCP layer.

With reference to the first aspect, in some implementations of the first aspect, the method further includes:
The physical layer of the terminal device receives third indication information from the PDCP layer, where the third indication information indicates to enable an encryption function of the physical layer, or the third indication information indicates that the encryption function of the PDCP layer is not enabled.

In this implementation, if the encryption function of the PDCP layer of the terminal device is not enabled, the PDCP layer sends the third indication information to the physical layer, so that the physical layer enables the encryption function. A mechanism of setting the encryption function at the physical layer (or setting an encryption switch at the physical layer) is provided. The encryption function of the physical layer may be enabled based on a data transmission requirement, to improve data transmission security.

With reference to the first aspect, in some implementations of the first aspect, when the second indication information indicates "lossy" or the distortion degree, before the terminal device codes the to-be-coded uplink data based on the first coding mode to obtain the coded data, the method further includes:
The terminal device performs an interleaving operation on bits of the to-be-coded uplink data.

In this implementation, if the transmit end sends data in a lossy transmission mode, an interleaving operation is performed before physical layer coding is performed on the data, to ensure that a series of consecutive errors do not occur in a data block restored by a receive end.

With reference to the first aspect, in some implementations of the first aspect, that the terminal device receives second indication information includes:

The terminal device receives a first MCS index, where the first MCS index is used to determine a first transmission configuration, and the first transmission configuration includes the second indication information.

In this implementation, a mapping relationship between the MCS index and the first transmission configuration is established, and the first transmission configuration includes the second indication information (that is, includes indication information of the loss degree). Therefore, the network device may indicate a loss degree requirement for data transmission to the terminal device by sending the MCS index to the terminal device, to reduce indication overheads.

With reference to the first aspect, in some implementations of the first aspect, the first transmission configuration further includes a retransmission number threshold, and the retransmission number threshold is associated with the first MCS index; and
that the terminal device processes downlink data or to-be-coded uplink data based on the first coding mode and the loss degree includes:
the terminal device receives the downlink data or sends the to-be-coded uplink data based on the first coding mode, the loss degree, and the retransmission number threshold.

In this implementation, the mapping relationship between the MCS index and the first transmission configuration is established, and the first transmission configuration includes the retransmission number threshold. Therefore, the network device sends the MCS index to the terminal device, and the terminal device may determine the first transmission configuration for data transmission based on the MCS index, learn of a maximum retransmission number, and then receive the downlink data or send the uplink data based on the first transmission configuration and the maximum retransmission number. The network device does not need to specifically configure the maximum retransmission number for the terminal device, to reduce signaling overheads.

In addition, the maximum retransmission number is configured, so that a distortion degree of transmitting physical-layer data of the transmit end may be jointly controlled based on one or more transmission parameters included in the first transmission configuration and with reference to a retransmission mechanism, to adapt to more channel states and more flexibly adjust a distortion degree range.

With reference to the first aspect, in some implementations of the first aspect, the method further includes:
The terminal device receives fourth indication information from the network device, where the fourth indication information indicates a retransmission number threshold; and
that the terminal device processes downlink data or to-be-coded uplink data based on the first coding mode and the loss degree includes:
the terminal device receives the downlink data or sends the to-be-coded uplink data based on the first coding mode, the loss degree, and the retransmission number threshold.

In this implementation, different loss degrees may be implemented by first fixing a maximum retransmission number and separately adjusting the MCS index. In this way, fewer transmission parameters are adjusted at a time, and when the MCS index is established offline, it is easier to quickly obtain an optimal transmission parameter through matching.

With reference to the first aspect, in some implementations of the first aspect, in uplink data transmission, the method further includes:
The terminal device sends fifth indication information to the network device, where the fifth indication information indicates a bit probability distribution of the to-be-coded uplink data, where
the first coding mode is determined based on the bit probability distribution.

In this implementation, the coding mode of the to-be-coded data is determined based on a bit probability distribution status of the to-be-coded data, to adapt to different distribution statuses of the to-be-coded data, so as to obtain better transmission efficiency.

With reference to the first aspect, in some implementations of the first aspect, that the first coding mode is determined based on the bit probability distribution includes:

The first coding mode is determined based on the bit probability distribution and a length of the to-be-coded uplink data.

In this implementation, the first coding mode is selected based on the bit probability distribution status of the to-be-coded data and the length of the to-be-coded data, to adapt to different distribution statuses and code lengths of the to-be-coded data, so as to obtain better transmission efficiency.

According to a second aspect, a data transmission method is provided. The method includes:
A network device sends first indication information, where the first indication information indicates a first coding mode, and the first coding mode is one of the following coding modes: channel coding, a coding mode in which compression and channel coding are separated, and a coding mode in which compression and channel coding are combined;
the network device sends second indication information, where the second indication information indicates a loss degree; and
the network device processes uplink data or to-be-coded downlink data based on the first coding mode and the loss degree.

With reference to the second aspect, in some implementations of the second aspect, that the second indication information indicates a loss degree includes:
The second indication information indicates "lossy" or "lossless"; or
the second indication information indicates a distortion degree.

With reference to the second aspect, in some implementations of the second aspect, that the network device processes uplink data or to-be-coded downlink data based on the first coding mode and the loss degree includes:
The network device codes the to-be-coded downlink data based on the first coding mode to obtain coded data; and
the network device encrypts the coded data.

With reference to the second aspect, in some implementations of the second aspect, that the network device encrypts the coded data includes:

The network device encrypts the to-be-coded downlink data when the to-be-coded downlink data is physical-layer native data of the network device, or when the to-be-coded downlink data is from an upper layer of a physical layer of the network device, and an encryption function of a packet data convergence protocol PDCP layer is not enabled.

With reference to the second aspect, in some implementations of the second aspect, the method further includes:
The physical layer of the network device receives sixth indication information from the upper layer, where the sixth indication information indicates to enable an encryption function of the physical layer, or the sixth indication information indicates that the encryption function of the PDCP layer is not enabled.

With reference to the second aspect, in some implementations of the second aspect, when the second indication information indicates "lossy" or the distortion degree, before the network device codes the to-be-coded downlink data based on the first coding mode to obtain the coded data, the method further includes:
The network device performs an interleaving operation on bits of the to-be-coded downlink data.

With reference to the second aspect, in some implementations of the second aspect, that the network device sends second indication information includes:
The network device sends a first MCS index, where the first MCS index is used to determine a first transmission configuration, and the first transmission configuration includes the second indication information.

With reference to the second aspect, in some implementations of the second aspect, the first transmission configuration further includes a retransmission number threshold, and the retransmission number threshold is associated with the first MCS index; and
that the network device processes uplink data or to-be-coded downlink data based on the first coding mode and the loss degree includes:
the network device receives the uplink data or sends the to-be-coded downlink data based on the first coding mode, the loss degree, and the retransmission number threshold.

With reference to the second aspect, in some implementations of the second aspect, the method further includes:
The network device sends fourth indication information to a terminal device, where the fourth indication information indicates a retransmission number threshold; and
that the network device processes uplink data or to-be-coded downlink data based on the first coding mode and the loss degree includes:
the network device receives the uplink data or sends the to-be-coded downlink data based on the first coding mode, the loss degree, and the retransmission number threshold.

With reference to the second aspect, in some implementations of the second aspect, the method further includes:
The network device obtains a bit probability distribution of the downlink data or a bit probability distribution of the to-be-coded uplink data; and
the network device determines the first coding mode based on the bit probability distribution.

With reference to the second aspect, in some implementations of the second aspect, that the network device obtains a bit probability distribution of the to-be-coded uplink data includes:

The network device receives fifth indication information from the terminal device, where the fifth indication information indicates the bit probability distribution of the to-be-coded uplink data.

With reference to the second aspect, in some implementations of the second aspect, that the network device determines the first coding mode based on the bit probability distribution includes:
The network device determines the first coding mode based on the bit probability distribution and a length of the to-be-coded downlink data.

According to a third aspect, a communication apparatus is provided. The communication apparatus has a function of implementing the method in any one of the first aspect or the possible implementations of the first aspect. The function may be implemented by hardware, or may be implemented by hardware by executing corresponding software. The hardware or the software includes one or more units corresponding to the foregoing function.

According to a fourth aspect, a communication apparatus is provided. The communication apparatus has a function of implementing the method in any one of the second aspect or the possible implementations of the second aspect. The function may be implemented by hardware, or may be implemented by hardware by executing corresponding software. The hardware or the software includes one or more units corresponding to the foregoing function.

According to a fifth aspect, a communication apparatus is provided, includes a processor and a memory, and optionally, may further include a transceiver. The memory is configured to store a computer program, and the processor is configured to: invoke and run the computer program stored in the memory, and control the transceiver to receive and send a signal, to enable the communication apparatus to perform the method in any one of the first aspect or the possible implementations of the first aspect.

According to a sixth aspect, a communication apparatus is provided, includes a processor and a memory, and optionally, may further include a transceiver. The memory is configured to store a computer program, and the processor is configured to: invoke and run the computer program stored in the memory, and control the transceiver to receive and send a signal, to enable the communication apparatus to perform the method in any one of the second aspect or the possible implementations of the second aspect.

According to a seventh aspect, a communication apparatus is provided, and includes a processor and a communication interface. The communication interface is configured to: receive data and/or information, and transmit the received data and/or information to the processor, the processor processes the data and/or the information, and the communication interface is further configured to output data and/or information obtained after processing by the processor, to enable the method in any one of the first aspect or the possible implementations of the first aspect to be performed.

According to an eighth aspect, a communication apparatus is provided, and includes a processor and a communication interface. The processor processes to-be-sent data and/or information, and the communication interface is further configured to output data and/or information obtained after processing by the processor, to enable the method in any one of the second aspect or the possible implementations of the second aspect to be performed.

According to a ninth aspect, a computer-readable storage medium is provided. The computer-readable storage medium stores computer instructions. When the computer instructions are run on a computer, the method in any one of the first aspect, the second aspect, or the possible implementations of the aspects is performed.

According to a tenth aspect, a computer program product is provided. The computer program product includes computer program code. When the computer program code is run on a computer, the method in any one of the first aspect, the second aspect, or the possible implementations of the aspects is performed.

According to an eleventh aspect, a wireless communication system is provided, and includes the communication apparatus according to the third aspect and/or the communication apparatus according to the fourth aspect.

### BRIEF DESCRIPTION OF DRAWINGS

FIG. 1 is a schematic diagram of a scenario of a communication system applicable to this application;
FIG. 2 is a system architectural diagram of a data transmission method according to this application;
FIG. 3 is a schematic diagram of an interleaving operation on to-be-coded data;
FIG. 4 is a schematic diagram of an encryption operation according to this application;
FIG. 5 is a schematic flowchart of a data transmission method according to this application;
FIG. 6 is a schematic diagram of three coding modes at a physical layer according to this application;
FIG. 7 is a schematic block diagram of a communication apparatus according to this application; and
FIG. 8 is a schematic diagram of a structure of a communication apparatus according to this application.

### DESCRIPTION OF EMBODIMENTS

The following describes technical solutions of embodiments of this application with reference to accompanying drawings.

The technical solutions of embodiments of this application may be applied to various communication systems, including but not limited to a 5th generation (5th generation, 5G) system, a new radio (new radio, NR) system, a long term evolution (long term evolution, LTE) system, an LTE frequency division duplex (frequency division duplex, FDD) system, an LTE time division duplex (time division duplex, TDD) system, and the like. The technical solutions provided in this application may be further applied to a future communication system, for example, a 6th generation mobile communication system, and may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system or another communication system, and the like.

The communication system applicable to this application may include one or more transmit ends and one or more receive ends. Optionally, one of the transmit end and the receive end may be a terminal device, and the other may be a network device. Alternatively, both the transmit end and the receive end are terminal devices.

For example, the terminal device may also be referred to as user equipment (user equipment, UE), an access terminal, a subscriber unit, a subscriber station, a mobile station, a mobile terminal (mobile terminal, MT), a remote station, a remote terminal, a mobile device, a user terminal, a terminal, a wireless communication device, a user agent, or a user apparatus. The terminal device in embodiments of this application may be a device that provides voice and/or data connectivity for a user, and may be configured to connect a person, an object, and a machine, for example, a handheld device or a vehicle-mounted device with a wireless connection function. The terminal device in embodiments of this application may be a mobile phone (mobile phone), a tablet computer (pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. Optionally, the UE may serve as a base station. For example, the UE may serve as a scheduling entity that provides a sidelink signal between UEs in V2X, D2D, or the like.

In embodiments of this application, an apparatus configured to implement a function of the terminal may be a terminal, or may be an apparatus that can support the terminal in implementing the function, for example, a chip system or a chip. The apparatus may be installed in the terminal. In embodiments of this application, the chip system may include a chip, or may include a chip and another discrete device.

For example, the network device may be a device with a wireless transceiver function. The network device may be a device that provides a wireless communication function service, is usually located on a network side, and includes but is not limited to a next-generation NodeB (gNodeB, gNB) in a 5th generation (5th generation, 5G) communication system, a base station in a 6th generation (6th generation, 6G) mobile communication system, a base station in a future mobile communication system, an access node in a wireless fidelity (wireless fidelity, Wi-Fi) system, an evolved NodeB (evolved NodeB, eNB) in a long term evolution (long term evolution, LTE) system, a radio network controller (radio network controller, RNC), a NodeB (NodeB, NB), a base station controller (base station controller, BSC), a home base station (for example, a home evolved NodeB, or a home NodeB, HNB), a baseband unit (baseband unit, BBU), a transmission reception point (transmission reception point, TRP), a transmission point (transmission point, TP), a base transceiver station (base transceiver station, BTS), or the like. In a network structure, the network device may include a central unit (central unit, CU) node, a distributed unit (distributed unit, DU) node, a RAN device including a CU node and a DU node, or a RAN device including a CU-control plane node, a CU-user plane node, and a DU node. Alternatively, the network device may be a radio controller, a relay station, a vehicle-mounted device, a wearable device, and the like in a cloud radio access network (cloud radio access network, CRAN) scenario. In addition, the base station may be a macro base station, a micro base station, a relay node, a donor node, or a combination thereof. The base station may alternatively be a communication module, a modem, or a chip disposed in the foregoing device or apparatus. The base station may alternatively be a mobile switching center, a device that performs a base station function in D2D, V2X, and M2M communication, a network side device in a 6G network, a device that performs a base station function in a future communication system, or the like. The base station may support networks of a same access technology or different access technologies. This is not limited.

In embodiments of this application, an apparatus configured to implement a function of the network device may be a network device, or may be an apparatus that can support the network device in implementing the function, for example, a chip system or a chip. The apparatus may be installed in the network device. In embodiments of this application, the chip system may include a chip, or may include a chip and another discrete device.

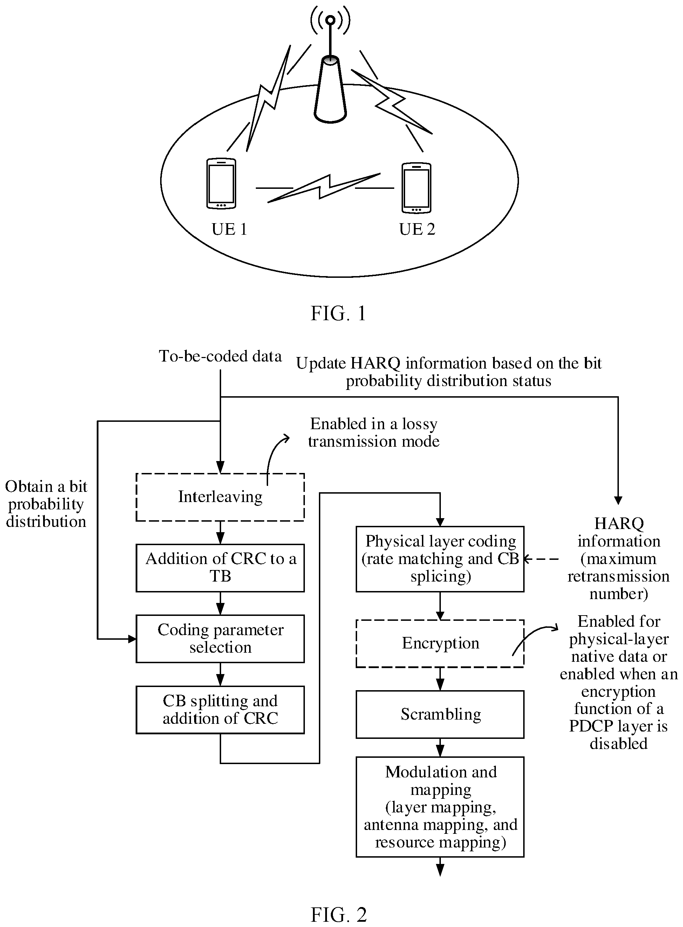

In addition, the technical solutions of this application may be applied to a plurality of communication scenarios. FIG. 1 is a schematic diagram of a scenario of a communication system applicable to this application.

With reference to FIG. 1, the data transmission method provided in this application is applicable to data transmission, that is, uplink or downlink data transmission, between a network device and a terminal, or is applicable to transmission, that is, sidelink (sidelink, SL) data transmission, between terminals. This is not limited in this application. Therefore, the transmit end in this specification may be a terminal in uplink data transmission, a network device in downlink data transmission, or a sending terminal in sidelink data transmission. Similarly, the receive end may be a network device in uplink data transmission, a terminal in downlink data transmission, or a receiving terminal in sidelink data transmission.

In the data transmission method in this application, a processing procedure of to-be-coded data of a transmit end is shown in FIG. 2.

It should be noted that in this application, the to-be-coded data of the transmit end is physical-layer to-be-coded data of the transmit end or data on which physical layer coding is to be performed. That is, the to-be-coded data is specific to a physical layer, and whether a coding operation is performed at another layer is not limited. For example, source data of the transmit end is transmitted to the physical layer after source coding at an application layer is performed. Before physical layer coding is performed, coded data obtained through source coding is still physical-layer to-be-coded data for the physical layer. For another example, source data of the transmit end is transmitted to the physical layer when no source coding at an application layer is performed. Similarly, before physical layer coding is performed, the source data is also physical-layer to-be-coded data.

FIG. 2 is a system architectural diagram of a data transmission method according to this application.

As shown in FIG. 2, processing such as addition of cyclic redundancy check (cyclic redundancy check, CRC) to a transport block (transport block, TB), coding parameter selection, code block (code block, CB) splitting and addition of CRC to a CB, physical layer coding, scrambling, and modulation and mapping (for example, layer mapping, antenna mapping, and resource mapping) is performed on to-be-coded data of a transmit end and then processed to-be coded data is sent. The transmit end obtains a bit probability distribution status of the to-be-coded data, and selects a coding parameter for physical layer coding based on the bit probability distribution status and (optional) with reference to another factor (for example, a length of the to-be-coded data). The following describes in detail a process of selecting the coding parameter. For example, the coding parameter includes a code rate and a code length.

In addition, the selecting a coding parameter for physical layer coding further includes configuring a transmission mode of the to-be-coded data of the transmit end.

For example, for configuration of the transmission mode, this application provides the following two configuration manners.

Manner 1: Different transmission modes are configured for different TBs (referred to as per TB configuration).

Manner 2: A transmission mode is configured for a TB based on a time period.

In the manner 2, in an example of downlink transmission, a network device sends a configuration instruction only during switching of the transmission mode, to indicate a specific transmission mode that the transmission mode needs to be switched to; or a network device indicates a transmission mode in a time period, for example, specifies a data length of a specific length, or refers to timing synchronization information on a network side and a terminal side. Another manner of configuring the transmission mode is not limited in this application.

In addition, optionally, if a hybrid automatic repeat request (hybrid automatic repeat request, HARQ) mechanism is enabled for data transmission, the bit probability distribution status of the to-be-coded data may be further used to update HARQ information. In this implementation, the transmit end adjusts the HARQ information based on the bit probability distribution status of the to-be-coded data, and selects an appropriate coding parameter for physical layer coding, to implement data transmission in a specific transmission mode. The following describes the data transmission mode in detail. For example, the HARQ information includes a maximum retransmission number. A bit probability distribution of the to-be-coded data may be used to adjust the maximum retransmission number (or a retransmission number threshold).

It should be noted that in FIG. 2, a combination of the HARQ information and physical layer coding is a dashed line, indicating that it is an optional solution to enable the HARQ mechanism during data transmission. Therefore, if the HARQ mechanism is not enabled during data transmission, the transmit end implements data transmission in a specific transmission mode based on the coding parameter for physical layer coding.

In addition, other processing processes, for example, addition of CRC to a TB, CB splitting and addition of CRC to a CB, scrambling, modulation and mapping, and other processing, in FIG. 2 are technical content that can be learned of by a person skilled in the art, and are not described in detail in this application.

Optionally, in this application, if a lossy transmission mode is selected, the transmit end performs an interleaving operation on bits of the to-be-coded data.

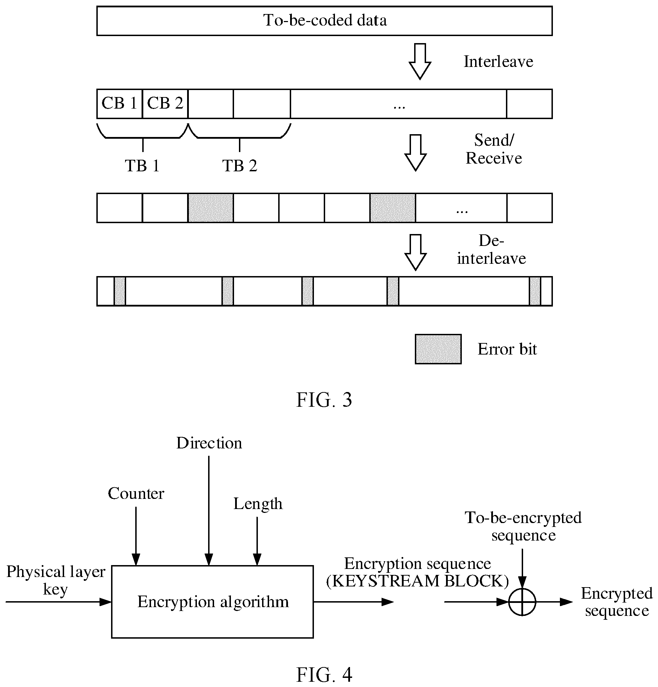

FIG. 3 is a schematic diagram of an interleaving operation on to-be-coded data according to this application. As shown in FIG. 3, the interleaving operation is performed on the bits of the to-be-coded data, so that error bits obtained after decoding by a receive end may be evenly distributed in an entire restored data block. In a case of lossy transmission, the interleaving operation is performed on the to-be-coded data before physical layer coding is performed, to ensure that a series of consecutive errors do not occur in the data block restored by the receive end.

In addition, if an encryption operation is performed on the to-be-coded data before physical layer coding, a bit probability distribution of the to-be-coded data may be damaged, and probabilities of 0 and 1 in a bit stream of the to-be-coded data may be approximately equally distributed, in other words, a proportion of 0 and a proportion of 1 are close to 0.5. Consequently, compression cannot be performed at a physical layer, or redundancy of the to-be-coded data cannot be used to further perform other coding and decoding operations. Therefore, in this application, the encryption operation is performed after physical layer coding and rate matching are completed.

In the following cases, an encryption operation may be further performed on a bit stream obtained after physical layer coding and rate matching, to improve transmission security.

In a possible case, the to-be-coded data is physical-layer native data of the transmit end. In this case, an encryption function of the physical layer may be enabled. In another possible case, the to-be-coded data is from an upper layer (for example, an application layer) of the physical layer of the transmit end, and an encryption function of a PDCP layer is disabled.

If the physical-layer to-be-coded data of the transmit end is from the upper layer of the transmit end, and the encryption function of the PDCP layer of the transmit end is disabled, an encryption function of the physical layer of the transmit end needs to be enabled. In this case, the upper layer, for example, the PDCP layer, of the transmit end needs to indicate the physical layer of the transmit end to enable the encryption function.

For example, the transmit end is a terminal device. In this case, a PDCP layer of the terminal device sends third indication information to a physical layer, where the third indication information indicates to enable an encryption function of the physical layer, or the third indication information indicates that an encryption function of the PDCP layer is not enabled. When receiving the third indication information, the physical layer of the terminal device enables the encryption function of the physical layer.

For another example, the transmit end is a network device. In this case, a PDCP layer of the network device sends sixth indication information to a physical layer, where the sixth indication information indicates to enable an encryption function of the physical layer, or the sixth indication information indicates that an encryption function of the PDCP layer is not enabled. When receiving the sixth indication information, the physical layer of the network device enables the encryption function of the physical layer.

The encryption operation is set to be performed after physical layer coding (including rate matching), to ensure that the bit probability distribution characteristic of the to-be-coded data is not damaged before physical layer coding is performed, so as not to affect transmission performance. In addition, the encryption operation ensures data transmission security.

The following describes an encryption process with reference to FIG. 4.

FIG. 4 is a schematic diagram of an encryption operation according to this application.

As shown in FIG. 4, a transmit end may use a block encryption algorithm. An input of the encryption algorithm includes a physical layer key. A parameter that can be obtained by a physical layer needs to be selected for the physical layer key (key).

In a solution, physical layer keys may be respectively set for a control channel and a data channel. For example, a key K_{PHY_CTRLenc} for encrypting the control channel and a key K_{PHY_DATAenc} for encrypting the data channel are set. In another solution, a common physical layer key K_{PHYenc} is set for a control channel and a data channel, that is, the physical layer key is not distinguished between the control channel and the data channel.

Optionally, in an embodiment, the physical layer key may be obtained based on a base key K_{gNB} on a network side. In another embodiment, the physical layer key may alternatively be obtained based on a UE identifier, a cell identifier, and the like. The UE identifier may be, for example, a cell radio network temporary identifier (cell radio network temporary identifier, C-RNTI) or an international mobile subscriber identity (international mobile subscriber identity, IMSI).

Physical layer keys of the transmit end and a receive end need to be synchronously updated.

It may be learned from FIG. 4 that input parameters of the encryption algorithm further include a counter (denoted as a counter), an uplink/downlink transmission direction (denoted as a direction), and a length (denoted as a length).

The counter is configured as follows:
1. PHY layers of the receive end and the transmit end maintain a same counter (for example, a 32-bit counter, which is set to 0 when being initialized or updated to 232), to change a generated encryption sequence (denoted as KEYSTREAM BLOCK).
2. Initialization: When a connection is established, the receive end and the transmit end reset the counter to 0, or initialize the counter to an agreed value that may be configured or reset through radio resource control (radio resource control, RRC) signaling, media access control (media access control, MAC) signaling, or a physical downlink control channel (physical downlink control channel, PDCCH).
3. Transmission phase: Timing synchronization information of the receive end and the transmit end is used to trigger an increase of the counter of the two ends, to change the generated encryption sequence. Optionally, triggering may be performed in synchronization with an update of a sub-frame (sub-frame, SF), a system frame number (system frame number, SFN), or a hyper frame number (hyper frame number, HFN), with an SF of an uplink (uplink, UL) or a downlink (downlink, DL), with a time of a system information block type 1 (system information block type 1, SIB1) or a master information block (master information block, MIB), or the like.

The length of the encryption sequence is configured and updated through RRC signaling, MAC signaling, or a PDCCH. The direction is determined based on uplink or downlink transmission.

The encryption algorithm may be 128-EEA1, 128-EEA2, 128-EEA3, or another encryption algorithm. An encryption function of the physical layer of the transmit end or the receive end may be enabled or disabled by adding a switch to the RRC/MAC/PDCCH. Control of an uplink encryption switch may be indicated by using the network side, and an encryption effective time needs to be explicitly or implicitly indicated, for example, the encryption function is enabled from an SF n after an acknowledgement (acknowledgement, ACK).

With reference to FIG. 2 to FIG. 4, the foregoing describes in detail physical layer coding and optional operations (for example, processing such as interleaving and encryption) performed by the transmit end provided in this application. The following describes a procedure of the data transmission method provided in this application.

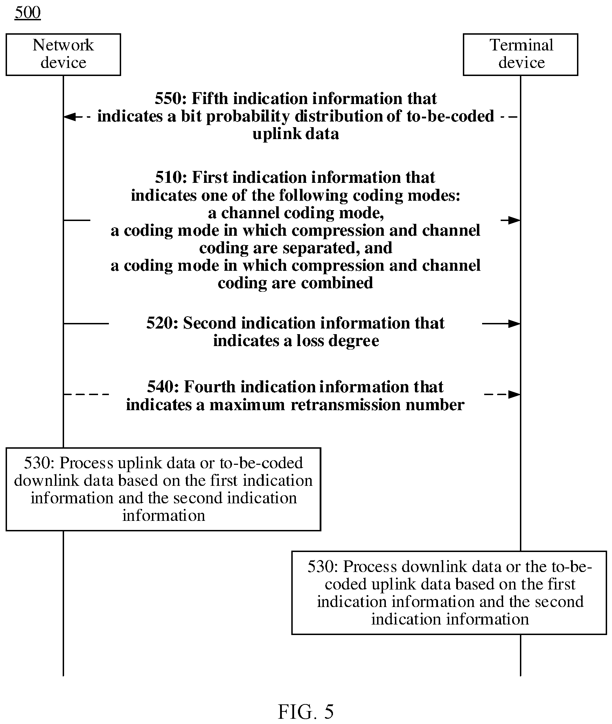

FIG. 5 is a schematic flowchart of a data transmission method according to this application.

510: A network device sends first indication information, and a terminal device receives the first indication information.

The first indication information indicates a first coding mode. The first coding mode is one of the following coding modes:
a channel coding mode, a coding mode in which compression and channel coding are separated, and a coding mode in which compression and channel coding are combined.

In this application, the three coding modes are specific to a physical layer, or in other words, one of the three coding modes may be used for coding at a physical layer.

For example, the channel coding mode means that only channel coding (channel coding, CC) is performed at the physical layer. At the physical layer, channel protection is performed on to-be-coded data.

The coding mode in which compression and channel coding are separated means that compression processing and channel coding are performed at the physical layer. At the physical layer, to-be-coded data is first compressed, and then channel protection is performed on a compressed bit.

The coding mode in which compression and channel coding are combined means that compression processing and channel coding are performed at the physical layer. At the physical layer, compression and channel protection are simultaneously performed on to-be-coded data.

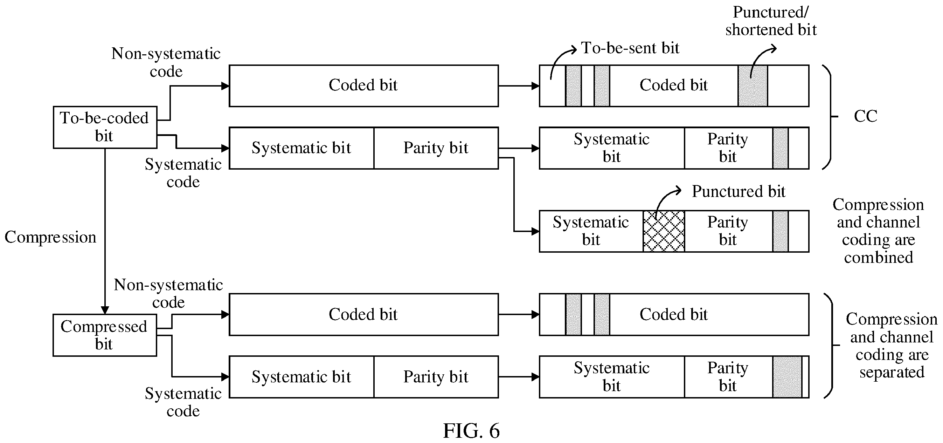

The following describes the three coding modes in detail with reference to FIG. 6.

FIG. 6 is a schematic diagram of three coding modes at a physical layer according to this application.
(1) Channel coding: Only channel protection is performed on to-be-coded data (that is, a to-be-coded bit) at the physical layer, and code rate adjustment may be implemented through puncturing and/or shortening. Optionally, a transmit end may obtain a coded bit by using a systematic code or a non-systematic code. For the systematic code, only a parity bit is punctured and/or shortened. No limitation is imposed for the non-systematic code. When the channel coding mode is used, a code rate at the physical layer is a channel code rate. To distinguish from a code rate in another coding mode, a code rate of channel coding is denoted as *R*₁ in this specification.
(2) Coding mode in which compression and channel coding are combined: Compression and channel coding are simultaneously performed on to-be-coded data at the physical layer. Coded data may be obtained by using a systematic code. Compression is implemented by puncturing a systematic bit, and a total code rate at the physical layer is adjusted with reference to a puncturing operation on the systematic bit, and a puncturing operation and/or a shortening operation on a parity bit. The total code rate at the physical layer is a joint code rate, and is denoted as R₂ in this specification. Herein, R₂=Compression rate/Channel code rate=Length of a compressed bit/Length of a to-be-coded bit × Length of a to-be-sent bit/Length of the compressed bit.
(3) Coding mode in which compression and channel coding are separated: To-be-coded data is first compressed at the physical layer, to obtain a compressed bit. Then, channel coding is performed on the compressed bit, to obtain a coded bit. Code rate adjustment is implemented through puncturing and/or shortening on a compression rate and channel coding. Coded data may be obtained by using a systematic code or a non-systematic code. For the systematic code, only a parity bit is punctured and/or shortened. No limitation is imposed for the non-systematic code. When the coding mode in which compression and channel coding are separated is used, a total code rate at the physical layer is jointly determined based on the compression rate and a channel code rate, and is denoted as *R*₃ in this specification. Herein, R₃=Compression rate × Channel code rate.

For brevity of description, in the following, the three coding modes are sequentially referred to as a coding mode a, a coding mode b, and a coding mode c in a sequence of the numbers (1), (2), and (3), to simplify descriptions. Therefore, in the following, the coding mode a is the coding mode of channel coding, the coding mode b is the coding mode in which compression and channel coding are combined, and the coding mode c is the coding mode in which compression and channel coding are separated.

It may be learned that in the coding mode of channel coding, physical layer coding relates only to channel coding. Therefore, the total code rate at the physical layer is the channel code rate. However, in the coding mode in which compression and channel coding are separated/combined, the total code rate at the physical layer depends on two parts: the compression rate and the channel code rate.

It should be particularly noted that compression in physical layer coding in the technical solutions of this application needs to be distinguished from source compression. It is learned from the foregoing descriptions that compression in this specification is compression processing at the physical layer. However, source compression is usually compression processing performed at an application layer on source data.

In this application, compression processing performed at the physical layer of the transmit end on the to-be-coded data is not associated with source compression performed at the application layer of the transmit end. That is, optionally, when the coding mode in which compression and channel coding are combined or the coding mode in which compression and channel coding are separated is used at the physical layer of the transmit end, whether source coding is performed on the source data at the application layer of the transmit end is not limited.

Optionally, in a possible case, the to-be-coded data in this application may be data from the application layer of the transmit end. When the to-be-coded data is data from the application layer of the transmit end, if no source coding is performed at the application layer, the to-be-coded data is the source data; or if source coding is performed on the source data at the application layer, the to-be-coded data is coded data obtained after source coding is performed at the application layer.

Therefore, the to-be-coded data in this application is specific to the physical layer, and is data on which physical layer coding is to be performed. Therefore, the to-be-coded data may be data that is from the application layer and on which no source coding is performed, or may be coded data that is from the application layer and that is obtained after source coding. It may be understood that even if source coding is performed on the source data at the application layer of the transmit end, the coded data obtained through source coding may still be redundant to some extent. Therefore, there may still be compression space at the physical layer.

Optionally, in another possible case, the to-be-coded data in this application is physical-layer native data of the transmit end. The physical-layer native data may be data generated or directly obtained by the physical layer.

For example, the physical-layer native data may include radio sensing imaging data, positioning tracking data, neural network data, and the like obtained by the physical layer.

520: The network device sends second indication information, and the terminal device receives the second indication information, where the second indication information indicates a loss degree.

The loss degree includes "lossy" or "lossless" (or "approximately lossless").

Optionally, the second indication information may directly indicate a distortion degree. It may be understood that if the second indication information indicates the distortion degree, "lossy" is implicitly indicated.

The network device indicates the first coding mode and the loss degree to the terminal device by sending the first indication information and the second indication information to the terminal device.

It is known that the first coding mode may be any one of the coding mode a, the coding mode b, and the coding mode c, and the loss degree may be "lossy" or "lossless". Therefore, six different transmission modes may be obtained by combining the first coding mode and the loss degree.
1. Lossless channel coding: Compatibility with an existing communication protocol and a channel coding method is implemented, code rate adjustment is implemented by using an adaptive modulation and coding (adaptive modulation and coding, AMC) module, and lossless transmission is implemented by using a retransmission mechanism.
2. Lossy channel coding: This mode is implemented by increasing a code rate, reducing a maximum retransmission number, or disabling retransmission.
3. Lossless coding mode in which compression and channel coding are separated: Lossless compression is performed through variable-length entropy coding, then channel coding is performed, and lossless transmission is implemented by adjusting a channel code rate and by using a retransmission mechanism.
4. Lossy coding mode in which compression and channel coding are separated: An option is to perform lossy compression through fixed-length coding (for example, fixed-length arithmetic coding), then perform channel coding, and implement reliable transmission with reference to a retransmission mechanism. Another option is to perform lossless compression through entropy coding (for example, Huffman coding or arithmetic coding), then perform channel coding, and implement an overall lossy case by adjusting a channel code rate and a maximum retransmission number.
5. Lossless coding mode in which compression and channel coding are combined: This mode is implemented by using a total code rate and a retransmission mechanism.
6. Lossy coding mode in which compression and channel coding are combined: This mode is implemented by increasing a total code rate, reducing a maximum retransmission number, or disabling retransmission.

To avoid cumbersome descriptions, the six transmission modes are respectively denoted as a transmission mode 1 to a transmission mode 6 below.

It should be understood that in the example in FIG. 5, the network device sends the first indication information to the terminal device to indicate one of the coding mode a, the coding mode b, and the coding mode c, and indicates "lossy" or "lossless" based on the second indication information, to indirectly indicate a transmission mode. A transmission mode indicated by the network device based on the first indication information and the second indication information is referred to as a first transmission mode below.

Optionally, different from the example in FIG. 5, in another implementation, the network device may directly indicate the first transmission mode to the terminal device.

For example, the network device indicates the first transmission mode to the terminal device through a physical downlink control channel (physical downlink control channel, PDCCH), MAC signaling, or RRC signaling.

For example, a network side sets a "transmission mode indication field" in downlink control information (downlink control information, DCI), MAC signaling, or RRC signaling, and indicates the selected first transmission mode to the terminal device by using the transmission mode indication field.

For example, the network device indicates the first transmission mode by using several bits.

Optionally, the network side and a terminal side may preconfigure or pre-agree on a transmission mode set. The transmission mode set may include the transmission mode 1 to the transmission mode 6, or may include only some but not all of the transmission mode 1 to the transmission mode 6.

For example, for some services or types of data, there is usually large compression space. Therefore, physical layer coding may be directly performed by considering the coding mode b and the coding mode c, and the coding mode a is not considered. Therefore, the transmission mode set may include only four transmission modes, that is, the transmission mode 3 to the transmission mode 6.

Therefore, for the transmission mode set, an appropriate transmission mode may be configured for selection based on a feature of the to-be-coded data at the physical layer.

In an embodiment, the transmission mode set includes the transmission mode 1 to the transmission mode 6. The network device indicates the first transmission mode by using 3 bits, and the first transmission mode relates to three coding modes. An indication of the first transmission mode may be 000-transmission mode 1; 001-transmission mode 2; 010-transmission mode 3; 011-transmission mode 4; 100-transmission mode 5; and 101-transmission mode 6, where 110 and 111 are reserved.

In another embodiment, the network device indicates the first transmission mode by using 2 bits, and the first transmission mode relates to two coding modes. An indication of the first transmission mode may be, for example, 00-transmission mode 1; 01-transmission mode 2; 10-transmission mode 3; and 11-transmission mode 4; or 00-transmission mode 1; 01-transmission mode 2; 10-transmission mode 5; and 11-transmission mode 6.

The foregoing indication manner is merely an example. A person skilled in the art may further figure out another indication manner based on the design concept of this application. This is not limited in this specification.

By using steps 510 and 520, the network side indicates the selected first transmission mode to the terminal device.

It may be understood that in downlink data transmission, the network device indicates the first transmission mode to be used for downlink data transmission to the terminal device by using steps 510 and 520, and subsequently, the network side sends downlink data to the terminal device in the selected first transmission mode. In uplink data transmission, steps 510 and 520 in FIG. 5 are merely used as an implementation. That is, the network device indicates (or specifies) the first transmission mode to be used for uplink data transmission to the terminal device, and subsequently, the terminal device sends uplink data to the network side in the first transmission mode indicated by the network side.

In uplink data transmission, there may be another implementation.

For example, in uplink data transmission, in another implementation, before the terminal device receives the first indication information and the second indication information from the network side, the terminal device may request, from the network side, a transmission mode to be used for sending the uplink data. The network side selects the first transmission mode for the terminal device based on a capability (for example, a capability of reconstructing distorted data) of the terminal device and some factors, and indicates the first transmission mode to the terminal device by using steps 510 and 520. Subsequently, the terminal device sends the uplink data to the network side in the first transmission mode indicated by the network side.

For another example, in uplink data transmission, in still another implementation, the terminal device and the network side pre-agree on a transmission mode to be used for sending the uplink data. When the used transmission mode is not changed, the terminal device may send the uplink data to the network side in the pre-agreed first transmission mode by default without a need for an indication of the network side. The network device receives the uplink data from the terminal device in the pre-agreed first transmission mode by default. After receiving a transmission mode change notification from the terminal device, the network side switches to a changed transmission mode, and receives the uplink data from the terminal device.

For another example, in uplink data transmission, in still another implementation, the terminal device selects the first transmission mode to be used for sending the uplink data, and reports the first transmission mode to the network side. Subsequently, the terminal device sends the uplink data in the first transmission mode selected by the terminal device, and the network device receives the uplink data from the terminal device based on the first transmission mode reported by the terminal device.

The foregoing manners are merely examples. A person skilled in the art may further figure out another manner in which the network side and the terminal device negotiate a transmission mode of the uplink data/downlink data. This is not limited in this specification.

After the first transmission mode is determined for data transmission, the transmit end of data further needs to determine a transmission configuration, denoted as a first transmission configuration below, corresponding to the first transmission mode. It should be understood that the first transmission configuration includes transmission parameters, and the transmission parameters are used to transmit the to-be-transmitted data in the first transmission mode.

For example, the transmission parameters may include a code rate, a length of the to-be-coded data, and a modulation and coding scheme (modulation and coding scheme, MCS).

Optionally, the transmission parameter may further include a parameter reflecting a channel condition, for example, a signal-to-noise ratio.

Optionally, the transmission parameter may further include a bit probability distribution of the physical-layer to-be-coded data of the transmit end.

Optionally, when a HARQ mechanism is enabled, the transmission parameter may further include a maximum retransmission number N_{ReTX}.

Optionally, the transmission parameters included in the first transmission configuration may be separately indicated, or may be jointly indicated. This is not limited in this application. The following provides some examples in which the network device indicates the transmission parameter to the terminal device.

In different coding modes, code rates corresponding to an MCS index are not necessarily consistent. For example, different from the coding mode of channel coding, in both a coding mode in which source coding and channel coding are separated and a coding mode in which source coding and channel coding are combined, the to-be-coded data is compressed to some extent. Therefore, the coding mode in which source coding and channel coding are separated and the coding mode in which source coding and channel coding are combined may support a higher maximum total code rate.

The following separately describes, for two cases in which the HARQ mechanism is enabled and in which the HARQ mechanism is not enabled, an indication of the transmission parameter corresponding to the first transmission configuration.

### Case 1

The HARQ mechanism is not enabled (that is, retransmission is disabled).

When retransmission is disabled, the loss degree of the physical-layer to-be-coded data may be adjusted by adjusting the MCS index.

In this implementation, a mapping relationship between the MCS index and the transmission parameter in the first transmission configuration is first established. The mapping relationship may be represented by using an MCS table.
(1) For the coding mode a (that is, CC), when a channel state, for example, a signal-to-noise ratio (signal-to-noise ratio, SNR)=6 dB, is given, the loss degree is related only to the code rate and modulation.

For example, the mapping relationship between the MCS index and the transmission parameter in the first transmission configuration may be shown in an example in Table 1.

**Table 1**

| MCS index | Transmission parameter included in the first transmission configuration | | |
|---|---|---|---|
| | Loss degree | Code rate | Modulation scheme |
| 0 | Lossy (distortion degree 1) | 7/8 | 16QAM |
| 1 | Lossy (distortion degree 2) | 3/4 | 16QAM |
| 2 | Lossy (distortion degree 3) | 3/4 | QPSK |
| 3 | Lossy (distortion degree 4) | 1/2 | QPSK |
| 4 | Approximately lossless | 1/2 | BPSK |

In Table 1 and the following tables, QAM represents quadrature amplitude modulation (quadrature amplitude modulation), QPSK represents quadrature phase shift keying (quadrature phase shift keying), and BPSK represents binary phase shift keying (binary phase shift keying). Details are not described below.

As shown in Table 1, after a mapping relationship between the MCS index and one or more transmission parameters is established, each time an MCS index is given, a transmission parameter corresponding to the MCS index may be uniquely determined.

For example, in Table 1, there is a mapping relationship between the MCS index and each of the code rate, the modulation scheme, and the loss degree.

The network device sends a first MCS index to the terminal device. The first MCS index is used to determine the first transmission configuration, and the first transmission configuration includes the second indication information. Optionally, the second indication information indicates the distortion degree, or the second indication information indicates "lossless". The terminal device determines, based on the first MCS index and the MCS table, transmission parameters such as a code rate, a modulation scheme, and a loss degree corresponding to the first MCS index. Without loss of generality, loss degrees corresponding to the distortion degree 1, the distortion degree 2, the distortion degree 3, and the distortion degree 4 in Table 1 are sequentially decreased (which is also applicable to other embodiments below). Certainly, a value relationship between the loss degrees corresponding to the distortion degree 1, the distortion degree 2, the distortion degree 3, and the distortion degree 4 may be adjusted based on an actual requirement. This is not limited in this application.

For example, if the first MCS index is 1, it indicates that data transmission is lossy transmission, the distortion degree is the distortion degree 2, the code rate is 3/4, and the modulation scheme is 16QAM. For another example, if the first MCS index is 4, it indicates that data transmission is lossless transmission, the code rate is 1/2, and the modulation scheme is BPSK.

It should be understood that Table 1 is merely used as an example for description. The first transmission configuration may include some transmission parameters in Table 1. This is not limited.

When different signal-to-noise ratios are considered, a two-dimensional MCS table may be further obtained, as shown in an example in Table 2.

**Table 2**

| | Lossy (distortion degree 1) | Lossy (distortion degree 2) | Lossy (distortion degree 3) | Lossy (distortion degree 4) | Approximately lossless |
|---|---|---|---|---|---|
| SNR=6 dB | 7/8 and 16QAM | 3/4 and 16QAM | 3/4 and QPSK | 1/2 and QPSK | 1/2 and BPSK |
| SNR=9 dB | 7/8 and 64QAM | 3/4 and 64QAM | 3/4 and 16QAM | 1/2 and 16QAM | 1/2 and QPSK |

Similar to that in Table 1, if an MCS index is given, a transmission configuration corresponding to the MCS index may be uniquely determined. For example, the network device may indicate an MCS index in a case of a specific signal-to-noise ratio based on a channel state.

(2) For the coding mode b or the coding mode c, when a channel state is given, the loss degree of the to-be-coded data is related not only to the total code rate and modulation, but also to the bit probability distribution of the to-be-coded data.

In lossy transmission, after interleaving the physical-layer to-be-coded data, the transmit end may obtain data that approximates to a Bernoulli distribution, and count a corresponding probability distribution parameter *p*₁. Herein, *p*₁ represents a proportion of 1 in the to-be-coded data. Alternatively, *p*₁ may represent a proportion of 0 in the to-be-coded data.

After obtaining the probability distribution parameter *p*₁ of the current TB, the transmit end may explicitly notify a receive end through control signaling, or implicitly notify a receive end. This is not limited.

In this application, a counted continuous probability distribution value of the to-be-coded data is quantized to obtain several quantized values. For example, a set of quantized values is {0.1, 0.25, 0.5, 0.75, 0.9}. Based on this, a two-dimensional MCS table may be constructed, as shown in Table 3.

**Table 3**

| | Lossy (distortion degree 1) | Lossy (distortion degree 2) | Lossy (distortion degree 3) | Lossy (distortion degree 4) | Approximately lossless |
|---|---|---|---|---|---|
| *p*₁=0.1 | 7/4 and 16QAM | 3/2 and 16QAM | 3/2 and QPSK | 1 and QPSK | 1 and BPSK |
| *p*₁=0.25 | 1 and 16QAM | 7/8 and 16QAM | 7/8 and QPSK | 5/8 and QPSK | 5/8 and BPSK |
| *p*₁=0.5 | 7/8 and 16QAM | 3/4 and 16QAM | 3/4 and QPSK | 1/2 and QPSK | 1/2 and BPSK |
| *p*₁=0.75 | 1 and 16QAM | 7/8 and 16QAM | 7/8 and QPSK | 5/8 and QPSK | 5/8 and BPSK |
| *p*₁=0.9 | 7/4 and 16QAM | 3/2 and 16QAM | 3/2 and QPSK | 1 and QPSK | 1 and BPSK |

Further, when different signal-to-noise ratios are considered, a three-dimensional mapping relationship, that is, MCS=f(*p*₁, distortion degree, SNR), may be further obtained. Based on the three-dimensional mapping relationship, when the distortion degree (for example, a BER=10⁻⁴) is given, a two-dimensional mapping relationship between the channel state, the bit probability distribution, and the MCS index may be further constructed for the coding mode b or the coding mode c. For example, an MCS table may be shown in Table 4.

**Table 4**

| | SNR=0 dB | SNR=3 dB | SNR=6 dB | SNR=9 dB | SNR=12 dB |
|---|---|---|---|---|---|
| *p*₁=0.1 | 1 and BPSK | 1 and QPSK | 3/2 and QPSK | 3/2 and 16QAM | 7/4 and 16QAM |
| *p*₁=0.25 | 5/8 and BPSK | 5/8 and QPSK | 7/8 and QPSK | 7/8 and 16QAM | 1 and 16QAM |
| *p*₁=0.5 | 1/2 and BPSK | 1/2 and QPSK | 3/4 and QPSK | 3/4 and 16QAM | 7/8 and 16QAM |
| *p*₁=0.75 | 5/8 and BPSK | 5/8 and QPSK | 7/8 and QPSK | 7/8 and 16QAM | 1 and 16QAM |
| *p*₁=0.9 | 1 and BPSK | 1 and QPSK | 3/2 and QPSK | 3/2 and 16QAM | 7/4 and 16QAM |

Optionally, in lossy transmission, the distortion degree for data transmission may be measured by using a bit error rate (bit error rate, BER) or a reconstructed mean squared error (mean squared error, MSE), as shown in an example in Table 5.

**Table 5**

| | Lossy (distortion degree 1) | Lossy (distortion degree 2) | Lossy (distortion degree 3) | Lossy (distortion degree 4) | Approximately lossless |
|---|---|---|---|---|---|
| BER | 10⁻² | 10⁻³ | 10⁻⁴ | 10⁻⁶ | ≤10⁻¹⁰ |
| Reconstructed MSE | 10⁻¹ | 10⁻² | 10⁻³ | 10⁻⁴ | ≤10⁻⁵ |

It may be learned from the foregoing examples that in various embodiments in which retransmission is disabled, a mapping relationship between the MCS index and each transmission parameter is established, the network side sends an MCS index (for example, the first MCS index) to the terminal device, and the terminal device may uniquely determine, based on the first MCS index by querying a pre-established MCS table, a transmission configuration, that is, the first transmission configuration, corresponding to the first MCS index. Therefore, the terminal device may determine transmission parameters such as a code rate and a modulation scheme in the first transmission mode. Further, the terminal device processes the downlink data or to-be-coded uplink data based on the transmission parameter in the first transmission configuration.

It should be understood that the MCS table in the foregoing embodiment merely indicates a mapping relationship between the MCS index and one or more transmission parameters included in the transmission configuration, and is not used to impose a limitation indicating that an MCS table needs to be established for implementation. Alternatively, another manner may be used. This is not limited in this specification.

### Case 2

The HARQ mechanism is enabled.

When retransmission is enabled, the loss degree of the physical-layer to-be-coded data is adjusted by adjusting the MCS index and the maximum retransmission number.

The following uses the coding mode b or the coding mode c as an example. When a channel state (for example, an SNR=6 dB) is given, the loss degree of the to-be-coded data of the transmit end is related not only to the total code rate, modulation, and the bit probability distribution of the to-be-coded data, but also to the maximum retransmission number.
(1) For example, in an implementation, the maximum retransmission number is closely coupled to the MCS index. In this implementation, a two-dimensional mapping relationship between the MCS index and the transmission parameter may be constructed, as shown in an example in Table 6.

**Table 6**

| | Distortion degree 1 (BER=10⁻²) | Distortion degree 2 (BER=10⁻³) | Distortion degree 3 (BER=10⁻⁴) | Distortion degree 4 (BER=10⁻⁶) |
|---|---|---|---|---|
| *p*₁=0.1 | 7/4, 64QAM, and *N*_{ReTX}=1 | 3/2, 64QAM, and *N*_{ReTX}=1 | 7/4, 32QAM, and *N*_{ReTX}=2 | 3/2, 32QAM, and *N*_{ReTX}=2 |
| *p*₁=0.25 | 1, 64QAM, and *N*_{ReTX}=1 | 7/8, 64QAM, and *N*_{ReTX}=1 | 1, 32QAM, and *N*_{ReTX}=2 | 7/8, 32QAM, and *N*_{ReTX}=2 |
| *p*₁=0.5 | 1, 64QAM, and *N*_{ReTX}=1 | 7/8, 64QAM, and *N*_{ReTX}=1 | 1, 32QAM, and *N*_{ReTX}=2 | 7/8, 32QAM, and *N*_{ReTX}=2 |
| *p*₁=0.75 | 1, 64QAM, and *N*_{ReTX}=1 | 7/8, 64QAM, and *N*_{ReTX}=1 | 1, 32QAM, and *N*_{ReTX}=2 | 7/8, 32QAM, and *N*_{ReTX}=2 |
| *p*₁=0.9 | 7/4, 64QAM, and *N*_{ReTX}=1 | 3/2, 64QAM, and *N*_{ReTX}=1 | 7/4, 32QAM, and *N*_{ReTX}=2 | 3/2, 32QAM, and *N*_{ReTX}=2 |

For the example in Table 6, in the implementation in which the maximum retransmission number is closely coupled to the MCS, maximum retransmission numbers corresponding to different MCS indexes are determined. Therefore, the maximum retransmission number does not need to be transmitted through additional signaling. When different signal-to-noise ratios are considered, a three-dimensional mapping relationship (MCS, N_{ReTX})=f(*p*₁, distortion degree, SNR) between the maximum retransmission number, the MCS index, and the transmission parameter may be further obtained.

(2) For example, in another implementation, the maximum retransmission number is loosely coupled to the MCS index.

For example, for different maximum retransmission numbers, a three-dimensional mapping relationship between the MCS index and the transmission parameter is separately constructed. Further, when different maximum retransmission numbers are considered, a four-dimensional mapping relationship, that is, MCS index=f(*p*₁, distortion degree, SNR, N_{ReTX}), may be obtained.

It may be learned that the loose coupling manner is a more general MCS control manner. In this case, in addition to indicating the MCS index to the terminal, the network side further needs to separately configure the maximum retransmission number or the retransmission number threshold.

For example, the network device sends fourth indication information to the terminal device, where the fourth indication information indicates the retransmission number threshold.

It should be understood that in downlink data transmission, the fourth indication information indicates a maximum retransmission number of the downlink data. The network device sends the downlink data to the terminal device based on the first transmission mode and the maximum retransmission number. The terminal device receives the downlink data from the network device based on the first transmission mode indicated by the first indication information and the second indication information, and the maximum retransmission number indicated by the fourth indication information.

In uplink data transmission, the fourth indication information indicates a maximum retransmission number of the uplink data. The terminal device sends the uplink data to the network device based on the first transmission mode and the maximum retransmission number. The network device receives the uplink data from the terminal device based on the first transmission mode and the maximum retransmission number.

Optionally, the maximum retransmission number may be configured through a PDCCH, or may be configured through MAC signaling or RRC signaling. That is, the fourth indication information may be carried in the PDCCH, the MAC signaling, or the RRC signaling. For example, N_{ReTX} may be configured through maxRetxThreshold in the RRC signaling and by adding an option for disabling retransmission, or may be configured in another manner. It may be understood that when N_{ReTX}=0, retransmission is disabled, as described in the case 1.

The foregoing describes in detail the first transmission configuration in the first transmission mode indicated by the network side to the terminal device.

It may be learned from the foregoing descriptions that in uplink data transmission or downlink data transmission, the network side or the terminal side selects a corresponding coding mode and loss degree based on a bit probability distribution status of the to-be-coded data, to determine the first transmission mode.

Some examples of determining the coding mode based on the bit probability distribution of the to-be-coded data of the transmit end are further provided below, and are applicable to both the network side and the terminal side.

As described above, the proportion *p*₁ of 1 in the to-be-coded data is still used to represent the bit probability distribution status of the to-be-coded data of the transmit end. A value range of *p*₁ is from 0 to 1. When *p*₁ is close to 0.5, it indicates that 0 and 1 in the to-be-coded data are evenly distributed, and compression space is small, and therefore channel coding, that is, the coding mode a, tends to be directly used. When *p*₁ is close to 0 or 1, it indicates that 0 and 1 in the to-be-coded data are very unevenly distributed, and compression space is large, and therefore the coding mode b or the coding mode c tends to be used.

Further, when the coding mode b or the coding mode c is used, if there is a short code length, the coding mode c has better transmission efficiency than the coding mode b. Therefore, one coding mode is selected from the two coding modes with further reference to a currently selected code length.

For example, the following provides some examples of selecting the coding mode.

In a manner, the coding mode is selected based on the bit probability distribution or with further reference to the length of the to-be-coded data (that is, a to-be-coded length).

For example, when 0.4<*p*₁<0.6, the coding mode a (that is, CC) is selected.

When *p*₁≤0.4 or *p*₁≥0.6, there are further the following selections:
(a) If the to-be-coded length (that is, a block length of to-be-transmitted bits) is less than or equal to 512, the coding mode c is selected.
(b) If the to-be-coded length is greater than 512, the coding mode b is selected.

In another manner, the coding mode is selected based on the bit probability distribution and the code length.

For example, when 0.4<*p*₁<0.6, the coding mode a is selected.

When 0.2<*p*₁≤0.4 or 0.6≤*p*₁<0.8, there are further the following selections:
(a) If the to-be-coded length is less than or equal to 1024, the coding mode c is selected.
(b) If the to-be-coded length is greater than 1024, the coding mode b is selected.

When 0.1<*p*₁≤0.2 or 0.8≤*p*₁<0.9, there are further the following selections:
(a) If the to-be-coded length is less than or equal to 512, the coding mode c is selected.
(b) If the to-be-coded length is greater than 512, the coding mode b is selected.

When *p*₁≤0.1 or *p*₁≥0.9, there are further the following selections:
(a) If the to-be-coded length is less than or equal to 256, the coding mode c is selected.
(b) If the to-be-coded length is greater than 256, the coding mode b is selected.

How to select the coding mode of the to-be-coded data is described above by using an example.

Optionally, the network side or the terminal side may select the loss degree by comprehensively considering a plurality of factors.

For example, the network side (an example of the transmit end) determines the loss degree. In this case, the network device may determine the loss degree based on a loss requirement specified by an application layer. For example, when the physical-layer to-be-coded data of the transmit end is from the application layer, the application layer of the transmit end may specify a loss degree requirement, for example, "lossless" or "lossy", on the to-be-coded data to the physical layer. In a case of loss, a maximum acceptable distortion degree may be specified. For another example, the transmit end may select, based on a capability of reconstructing distorted data by the receive end, a maximum loss degree acceptable to the receive end. For example, in downlink data transmission, the network side selects loss degrees of data transmission for different terminal devices in a targeted manner based on different capabilities of reconstructing distorted data by the different terminals.

For example, if the to-be-coded data is the physical-layer native data of the transmit end, the transmit end may further determine the loss degree based on a type of the to-be-coded data and a requirement of the receive end for reconstructing or restoring distorted data.

For example, if the to-be-coded data is the radio sensing imaging data or the positioning tracking data obtained by the physical layer of the transmit end, the transmit end may determine the loss degree based on required sensing precision or a positioning precision requirement. When there is a high requirement on sensing precision or positioning precision, a transmission parameter with a low loss degree needs to be selected. For another example, if the to-be-coded data is the neural network data obtained by the physical layer, the transmit end may determine the loss degree based on a function type of a current neural network and a requirement on accuracy, precision, and the like of restoring an implemented function on a receiving side, to control the loss degree.

It should be understood that based on the foregoing descriptions, the terminal device may also determine the loss degree based on factors such as the bit probability distribution of the physical-layer to-be-coded data or a combination of the bit probability distribution of the to-be-coded data and the length of the to-be-coded data, and the case in which the to-be-coded data is the physical-layer native data. Details are not described.

530: The network device processes the uplink data or to-be-coded downlink data based on the first indication information and the second indication information.

In uplink data transmission, if the first transmission mode is determined by the network side, the terminal device needs to obtain a bit probability distribution status of to-be-coded data on the terminal side, and notify the network device of the bit probability distribution status. For example, the terminal device sends fifth indication information to the network device, where the fifth indication information indicates a bit probability distribution of the to-be-coded data of the terminal device. The network device selects a corresponding coding mode and loss degree (that is, the first transmission mode) based on the bit probability distribution status of the to-be-coded data on the terminal side, and notifies (or indicates) the terminal device. Subsequently, the terminal device sends the uplink data in the first transmission mode indicated by the network side, and the network side decodes the received uplink data in the first transmission mode.

In uplink data transmission, if the first transmission mode is determined by the terminal side and needs to be notified to the network side, the terminal device obtains a bit probability distribution status of to-be-coded data on the terminal side, directly selects a corresponding coding mode and loss degree (that is, selects the first transmission mode) based on the bit probability distribution status, and reports the corresponding coding mode and loss degree to the network side. Subsequently, the terminal device sends the uplink data in the selected first transmission mode, and the network side decodes the received uplink data in the first transmission mode indicated by the terminal device.

In downlink data transmission, the first transmission mode is determined and notified by the network side to the terminal device. Therefore, the network device obtains a bit probability distribution status of to-be-coded data on the network side, directly selects a corresponding coding mode and loss degree based on the bit probability distribution, and notifies the terminal device. Subsequently, the network device sends the downlink data in the selected first transmission mode, and the terminal device decodes the received downlink data in the first transmission mode indicated by the network side.

It may be learned that according to the data transmission method provided in this application, the physical-layer data of the transmit end may support a more flexible coding mode, the loss degree may also be flexibly selected, and there is no limitation indicating that only the lossless mode in which source coding and channel coding are separated can be used. Therefore, flexibility is higher. In addition, the physical-layer data is directly sent after being compressed and coded at the physical layer, and does not need to pass through a processing path of physical layer-application layer-physical layer processing. Therefore, a data transmission delay is reduced, and system performance is improved.

It should be understood that the data transmission procedure shown in FIG. 5 is merely a basic procedure. The procedure shown in FIG. 5 may further include another step.

For example, in uplink data transmission or downlink data transmission, if a retransmission function is enabled, and the MCS index is loosely coupled to the maximum retransmission number, the method 500 further includes step 540.

540: The network device sends the fourth indication information to the terminal device, and the terminal device receives the fourth indication information from the network device. The fourth indication information indicates the retransmission number threshold, and the retransmission number threshold is associated with the first MCS index. For the first MCS index, refer to the foregoing descriptions. Details are not described herein.

For another example, in uplink data transmission, the terminal device may need to report the bit probability distribution status of the physical-layer to-be-coded data on the terminal side to the network side. In this case, before step 510 of the method 500, step 550 is further included.

550: The terminal device sends the fifth indication information to the network device, where the fifth indication information indicates the bit probability distribution of the to-be-coded uplink data.

Correspondingly, the network device receives the fifth indication information from the terminal device. The network device may learn of the bit probability distribution of the to-be-coded uplink data of the terminal device based on the bit probability distribution indicated by the fifth indication information, and determine the first coding mode and the like based on the bit probability distribution.

The data transmission method provided in this application is described above in detail. It may be learned that in the data transmission method provided in this application, the physical-layer to-be-coded data of the transmit end may support lossy or lossless transmission, channel coding, the coding mode in which compression and channel coding are separated, and the coding mode in which compression and channel coding are combined. Therefore, physical layer coding performed by the transmit end may support a more flexible data transmission mode. In addition, the physical-layer to-be-coded data of the transmit end may be directly sent after being compressed and coded in a supported coding mode at the physical layer, and does not need to be sent to the application layer for processing and then sent after channel coding at the physical layer is performed. Therefore, a data sending path is shorter, and a sending delay can be reduced. In view of the foregoing advantages, the data transmission method provided in this application may improve data transmission performance.

The following describes a communication apparatus provided in this application.

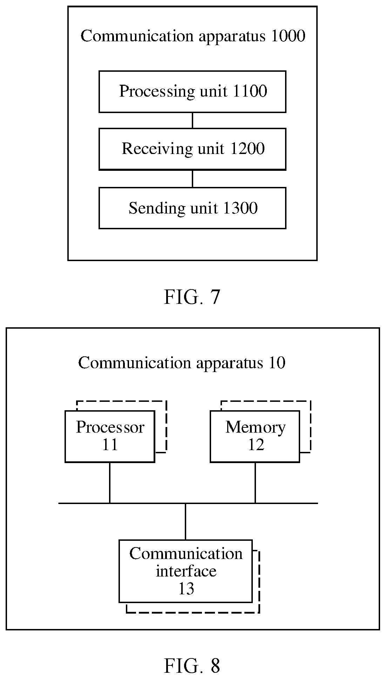

FIG. 7 is a schematic block diagram of a communication apparatus according to this application. As shown in FIG. 7, the communication apparatus 1000 includes a processing unit 1100, a receiving unit 1200, and a sending unit 1300.

Optionally, the communication apparatus 1000 may correspond to the terminal device in embodiments of this application.

In this case, the units of the communication apparatus 1000 are configured to implement the following functions:
The receiving unit 1200 is configured to: receive first indication information, where the first indication information indicates a first coding mode, and the first coding mode is one of the following coding modes: channel coding, a coding mode in which compression and channel coding are separated, and a coding mode in which compression and channel coding are combined; and
receive second indication information, where the second indication information indicates a loss degree.

The processing unit 1100 is configured to process downlink data or to-be-coded uplink data based on the first coding mode and the loss degree.

Optionally, in an embodiment, that the second indication information indicates a loss degree includes:
The second indication information indicates "lossy" or "lossless"; or
the second indication information indicates a distortion degree.

Optionally, in an embodiment, the processing unit 1100 is configured to:
code the to-be-coded uplink data based on the first coding mode to obtain coded data; and
encrypt the coded data.

Optionally, in an embodiment, the processing unit 1100 is configured to:
encrypt the to-be-coded uplink data when the to-be-coded uplink data is physical-layer native data of the communication apparatus, or when the to-be-coded uplink data is from an upper layer of a physical layer of the communication apparatus, and an encryption function of a packet data convergence protocol PDCP layer is not enabled.

Optionally, in an embodiment, the physical layer of the communication apparatus receives third indication information from the PDCP layer of the communication apparatus through the receiving unit 1200, where the third indication information indicates to enable an encryption function of the physical layer, or the third indication information indicates that the encryption function of the PDCP layer is not enabled.

Optionally, in an embodiment, when the second indication information indicates "lossy" or the distortion degree, the processing unit 1100 is further configured to:
perform an interleaving operation on bits of the to-be-coded uplink data.

Optionally, in an embodiment, the receiving unit 1200 is configured to:
receive a first MCS index, where the first MCS index is used to determine a first transmission configuration, and the first transmission configuration includes the second indication information.

Optionally, in an embodiment, the first transmission configuration further includes a retransmission number threshold, and the retransmission number threshold is associated with the first MCS index; and
the processing unit 1100 is configured to process the downlink data or the to-be-coded uplink data based on the first coding mode, the loss degree, and the retransmission number threshold.

Optionally, in an embodiment, the receiving unit 1200 is configured to receive fourth indication information from a network device, where the fourth indication information indicates a retransmission number threshold; and
the processing unit 1100 is configured to control, based on the first coding mode, the loss degree, and the retransmission number threshold, the receiving unit 1200 to receive the downlink data, or control the sending unit 1300 to send the to-be-coded uplink data.

Optionally, in an embodiment, in uplink data transmission, the sending unit 1300 is further configured to send fifth indication information to the network device, where the fifth indication information indicates a bit probability distribution of the to-be-coded uplink data, where
the first coding mode is determined based on the bit probability distribution.

Optionally, in an embodiment, that the first coding mode is determined based on the bit probability distribution includes:
The first coding mode is determined based on the bit probability distribution and a length of the to-be-coded uplink data.

Optionally, the communication apparatus 1000 may correspond to the network device in embodiments of this application.

In this case, the units of the communication apparatus 1000 are configured to implement the following functions:
The sending unit 1300 is configured to: send first indication information, where the first indication information indicates a first coding mode, and the first coding mode is one of the following coding modes: channel coding, a coding mode in which compression and channel coding are separated, and a coding mode in which compression and channel coding are combined; and
send second indication information, where the second indication information indicates a loss degree.

The processing unit 1100 is configured to process uplink data or to-be-coded downlink data based on the first coding mode and the loss degree.

Optionally, in an embodiment, that the second indication information indicates a loss degree includes:
The second indication information indicates "lossy" or "lossless"; or
the second indication information indicates a distortion degree.

Optionally, in an embodiment, the processing unit 1100 is configured to:
code the to-be-coded downlink data based on the first coding mode to obtain coded data; and
encrypt the coded data.

Optionally, in an embodiment, the processing unit 1100 is configured to:
encrypt the to-be-coded downlink data when the to-be-coded downlink data is physical-layer native data of the communication apparatus, or when the to-be-coded downlink data is from an upper layer of a physical layer of the communication apparatus, and an encryption function of a packet data convergence protocol PDCP layer is not enabled.

Optionally, in an embodiment, the physical layer of the communication apparatus receives sixth indication information from the upper layer of the communication apparatus through the receiving unit 1200, where the sixth indication information indicates to enable an encryption function of the physical layer, or the sixth indication information indicates that the encryption function of the PDCP layer is not enabled.

Optionally, in an embodiment, when the second indication information indicates "lossy" or the distortion degree, the processing unit 1100 is configured to:
perform an interleaving operation on bits of the to-be-coded downlink data.

Optionally, in an embodiment, the sending unit 1300 is configured to send a first MCS index, where the first MCS index is used to determine a first transmission configuration, and the first transmission configuration includes the second indication information.

Optionally, in an embodiment, the first transmission configuration further includes a retransmission number threshold, and the retransmission number threshold is associated with the first MCS index; and
the processing unit 1100 is configured to:
process the uplink data or the to-be-coded downlink data based on the first coding mode, the loss degree, and the retransmission number threshold.

Optionally, in an embodiment, the sending unit 1300 is configured to:
send fourth indication information to a terminal device, where the fourth indication information indicates a retransmission number threshold; and
the processing unit 1100 is configured to:
   control, based on the first coding mode, the loss degree, and the retransmission number threshold, the receiving unit 1200 to receive the uplink data, or control the sending unit 1300 to send the to-be-coded downlink data.

Optionally, in an embodiment, the processing unit 1100 is further configured to:
obtain a bit probability distribution of the downlink data or a bit probability distribution of the to-be-coded uplink data; and
determine the first coding mode based on the bit probability distribution.

Optionally, in an embodiment, the receiving unit 1200 is configured to:
receive fifth indication information from the terminal device, where the fifth indication information indicates the bit probability distribution of the to-be-coded uplink data.

Optionally, in an embodiment, the processing unit 1100 is further configured to determine the first coding mode based on the bit probability distribution and a length of the to-be-coded downlink data.

In the foregoing implementations, the receiving unit 1200 and the sending unit 1300 may alternatively be integrated into one transceiver unit or one input/output unit that has both a receiving function and a sending function. This is not limited herein.

In embodiments in which the communication apparatus 1000 corresponds to the terminal device, the processing unit 1100 is configured to perform processing and/or an operation, other than sending and receiving actions, implemented inside the terminal device, the receiving unit 1200 is configured to perform a receiving action performed by the terminal device, and the sending unit 1300 is configured to perform a sending action performed by the terminal device.

For example, in FIG. 5, the receiving unit 1200 is configured to perform receiving actions in steps 510 and 520; the processing unit 1100 is configured to perform step 530 on a terminal device side; optionally, the sending unit 1300 is configured to perform a sending action in step 550; and optionally, the receiving unit 1200 is further configured to perform a receiving action in step 540.

In embodiments in which the communication apparatus 1000 corresponds to the network device, the processing unit 1100 is configured to perform processing and/or an operation, other than sending and receiving actions, implemented inside the network device, the receiving unit 1200 is configured to perform a receiving action performed by the network device, and the sending unit 1300 is configured to perform a sending action performed by the network device.

For example, in FIG. 5, the sending unit 1300 is configured to perform sending actions in steps 510 and 520; the processing unit 1100 is configured to perform step 530 on a network device side; optionally, the receiving unit 1200 is configured to perform a receiving action in step 550; and optionally, the sending unit 1300 is further configured to perform a sending action in step 540.

FIG. 8 is a schematic diagram of a structure of a communication apparatus according to this application. As shown in FIG. 8, the communication apparatus 10 includes one or more processors 11, one or more memories 12, and one or more communication interfaces 13. The processor 11 is configured to control the communication interface 13 to receive and send a signal, the memory 12 is configured to store a computer program, and the processor 11 is configured to: invoke the computer program from the memory 12, and run the computer program, to enable the communication apparatus 10 to perform processing performed by the terminal device or the network device in the method embodiments of this application.

For example, the processor 11 may have a function of the processing unit 1100 shown in FIG. 6, and the communication interface 13 may have a function of the receiving unit 1200 and/or a function of the sending unit 1300 shown in FIG. 6. Specifically, the processor 11 may be configured to perform processing or an operation performed inside the communication apparatus, and the communication interface 13 is configured to perform a sending and/or receiving operation performed by the communication apparatus.

In an implementation, the communication apparatus 10 may be the terminal device in the method embodiments. In this implementation, the communication interface 13 may be a transceiver of the terminal device. The transceiver may include a receiver and/or a transmitter. Optionally, the processor 11 may be a baseband apparatus of the terminal device, and the communication interface 13 may be a radio frequency apparatus.

In another implementation, the communication apparatus 10 may be a chip (or a chip system) installed in the terminal device. In this implementation, the communication interface 13 may be an interface circuit or an input/output interface.

In an implementation, the communication apparatus 10 may be the network device in the method embodiments. In this implementation, the communication interface 13 may be a transceiver of the network device. The transceiver may include a receiver and/or a transmitter. Optionally, the processor 11 may be a baseband apparatus of the network device, and the communication interface 13 may be a radio frequency apparatus.

In another implementation, the communication apparatus 10 may be a chip (or a chip system) installed in the network device. In this implementation, the communication interface 13 may be an interface circuit or an input/output interface.

In FIG. 8, a dashed box behind a component (for example, the processor, the memory, or the communication interface) indicates that there may be at least one component.

Optionally, the memory and the processor in the foregoing apparatus embodiments may be physically independent units, or the memory and the processor may be integrated together. This is not limited in this specification.

In addition, this application further provides a computer-readable storage medium. The computer-readable storage medium stores computer instructions. When the computer instructions are run on a computer, an operation and/or processing performed by the terminal device in the method embodiments of this application are/is performed.

This application further provides a computer-readable storage medium. The computer-readable storage medium stores computer instructions. When the computer instructions are run on a computer, an operation and/or processing performed by the network device in the method embodiments of this application are/is performed.

In addition, this application further provides a computer program product. The computer program product includes computer program code or instructions. When the computer program code or the instructions are run on a computer, an operation and/or processing performed by the terminal device in the method embodiments of this application are/is performed.

This application further provides a computer program product. The computer program product includes computer program code or instructions. When the computer program code or the instructions are run on a computer, an operation and/or processing performed by the network device in the method embodiments of this application are/is performed.

In addition, this application further provides a chip. The chip includes a processor. A memory configured to store a computer program is disposed independent of the chip. The processor is configured to execute the computer program stored in the memory, to enable an apparatus in which the chip is installed to perform an operation and/or processing performed by the terminal device in any method embodiment.

Further, the chip may include a communication interface. The communication interface may be an input/output interface, an interface circuit, or the like. Further, the chip may include the memory.

This application further provides a chip. The chip includes a processor. A memory configured to store a computer program is disposed independent of the chip. The processor is configured to execute the computer program stored in the memory, to enable an apparatus in which the chip is installed to perform an operation and/or processing performed by the network device in any method embodiment.

Further, the chip may include a communication interface. The communication interface may be an input/output interface, an interface circuit, or the like. Further, the chip may include the memory.

Optionally, there may be one or more processors, there may be one or more memories, and there may be one or more memories.

In addition, this application further provides a communication apparatus (for example, may be a chip or a chip system), including a processor and a communication interface. Based on an operation and/or processing performed by the terminal device in any one of the foregoing method embodiments, the communication interface is configured to receive (or referred to as "input") data and/or information such as first indication information and second indication information, and the processor processes downlink data or to-be-coded uplink data based on the first indication information and the second indication information. Optionally, the communication interface is further configured to send (or referred to as "output") data and/or information obtained after processing by the processor, for example, send fifth indication information and send coded uplink data. Optionally, the communication interface is further configured to receive (or referred to as "input") data and/or information, for example, receive fourth indication information and receive coded downlink data.

This application further provides a communication apparatus (for example, may be a chip or a chip system), including a processor and a communication interface. Based on an operation and/or processing performed by the network device in any one of the foregoing method embodiments, the processor determines first indication information and second indication information, and processes downlink data or to-be-coded uplink data based on a first coding mode and a loss degree. The communication interface is configured to send (or referred to as "output") data and/or information such as the first indication information and the second indication information. Optionally, the communication interface is further configured to receive (or referred to as "input") data and/or information, for example, receive fifth indication information and receive coded uplink data. Optionally, the communication interface is further configured to send (or referred to as "output") data and/or information, for example, send fourth indication information and send coded downlink data.

In addition, this application further provides a communication apparatus, including at least one processor. The at least one processor is coupled to at least one memory. The at least one processor is configured to execute a computer program or instructions stored in the at least one memory, to enable the communication apparatus to perform an operation and/or processing performed by the terminal device in any method embodiment.

This application further provides a communication apparatus, including at least one processor. The at least one processor is coupled to at least one memory. The at least one processor is configured to execute a computer program or instructions stored in the at least one memory, to enable the communication apparatus to perform an operation and/or processing performed by the network device in any method embodiment.

In addition, this application further provides a wireless communication system, including the terminal device and the network device in method embodiments of this application.

The memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative descriptions, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM). It should be noted that the memory in the system and method described in this specification includes but is not limited to these memories and any memory of another proper type.

All or some of the methods provided in the foregoing embodiments may be implemented by software, hardware, firmware, or any combination thereof. When software is used for implementation, all or some of the methods may be implemented in a form of a computer program product. The computer program product may include one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, into which one or more usable media are integrated.

To clearly describe the technical solutions of embodiments of this application, numbers such as "first" and "second" are used in embodiments of this application to distinguish between same items or similar items that provide basically same functions. For example, first information and second information are merely used to distinguish between different information, and do not limit a sending/receiving sequence of the first information and the second information. A person skilled in the art may understand that the numbers such as "first" and "second" do not limit the number and an execution sequence, and the words such as "first" and "second" do not necessarily indicate a definite difference.

In embodiments of this application, "at least one" means one or more, and "a plurality of" means two or more. The term "and/or" describes an association relationship between associated objects, and represents that three relationships may exist. For example, A and/or B may represent the following three cases: Only A exists, both A and B exist, and only B exists, where A and B may be singular or plural. The character "/" usually indicates an "or" relationship between associated objects. At least one of the following items (pieces) or a similar expression thereof indicates any combination of these items, including a single item (piece) or any combination of a plurality of items (pieces). For example, at least one of a, b, or c may represent a, b, c, a and b, a and c, b and c, or a, b, and c, where a, b, or c may be singular or plural.

A person of ordinary skill in the art may be aware that the example units, algorithms, and steps described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for convenient and brief description, for detailed working processes of the system, apparatus, and unit described above, refer to the corresponding processes in the foregoing method embodiments. Details are not described herein.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, each unit may exist alone physically, or two or more units may be integrated into one unit.

In addition, functional units in embodiments of this application may be integrated into one processing unit, each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
receiving, by a terminal device, first indication information, wherein the first indication information indicates a first coding mode, and the first coding mode is one of the following coding modes: a channel coding mode, a coding mode in which compression and channel coding are separated, and a coding mode in which compression and channel coding are combined;
receiving, by the terminal device, second indication information, wherein the second indication information indicates a loss degree; and
processing, by the terminal device, downlink data or to-be-coded uplink data based on the first coding mode and the loss degree.

2. The method according to claim 1, wherein that the second indication information indicates a loss degree comprises:
the second indication information indicates "lossy" or "lossless"; or
the second indication information indicates a distortion degree.

3. The method according to claim 1 or 2, wherein the processing, by the terminal device, to-be-coded uplink data based on the first coding mode and the loss degree comprises:
coding, by the terminal device, the to-be-coded uplink data based on the first coding mode to obtain coded data; and
encrypting, by the terminal device, the coded data.

4. The method according to claim 3, wherein the encrypting, by the terminal device, the coded data comprises:
encrypting, by the terminal device, the to-be-coded uplink data when the to-be-coded uplink data is physical-layer native data of the terminal device, or when the to-be-coded uplink data is from an upper layer of a physical layer of the terminal device, and an encryption function of a packet data convergence protocol PDCP layer is not enabled.

5. The method according to claim 4, wherein the method further comprises:
receiving, by the physical layer of the terminal device, third indication information from the PDCP layer, wherein the third indication information indicates to enable an encryption function of the physical layer, or the third indication information indicates that the encryption function of the PDCP layer is not enabled.

6. The method according to any one of claims 3 to 5, wherein when the second indication information indicates "lossy" or the distortion degree, before the coding, by the terminal device, the to-be-coded uplink data based on the first coding mode to obtain coded data, the method further comprises:
performing, by the terminal device, an interleaving operation on bits of the to-be-coded uplink data.

7. The method according to any one of claims 1 to 6, wherein the receiving, by the terminal device, second indication information comprises:
receiving, by the terminal device, a first MCS index, wherein the first MCS index is used to determine a first transmission configuration, and the first transmission configuration comprises the second indication information.

8. The method according to claim 7, wherein the first transmission configuration further comprises a retransmission number threshold, and the retransmission number threshold is associated with the first MCS index; and
the processing, by the terminal device, downlink data or to-be-coded uplink data based on the first coding mode and the loss degree comprises:
receiving, by the terminal device, the downlink data or sending the to-be-coded uplink data based on the first coding mode, the loss degree, and the retransmission number threshold.

9. The method according to claim 7, wherein the method further comprises:
receiving, by the terminal device, fourth indication information, wherein the fourth indication information indicates a retransmission number threshold; and
the processing, by the terminal device, downlink data or to-be-coded uplink data based on the first coding mode and the loss degree comprises:
receiving, by the terminal device, the downlink data or sending the to-be-coded uplink data based on the first coding mode, the loss degree, and the retransmission number threshold.

10. The method according to any one of claims 1 to 9, wherein in uplink data transmission, the method further comprises:
sending, by the terminal device, fifth indication information, wherein the fifth indication information indicates a bit probability distribution of the to-be-coded uplink data; and
the first coding mode is determined based on the bit probability distribution.

11. The method according to claim 10, wherein that the first coding mode is determined based on the bit probability distribution comprises:
the first coding mode is determined based on the bit probability distribution and a length of the to-be-coded uplink data.

12. A data transmission method, comprising:
sending, by a network device, first indication information, wherein the first indication information indicates a first coding mode, and the first coding mode is one of the following coding modes: channel coding, a coding mode in which compression and channel coding are separated, and a coding mode in which compression and channel coding are combined;
sending, by the network device, second indication information, wherein the second indication information indicates a loss degree; and
processing, by the network device, uplink data or to-be-coded downlink data based on the first coding mode and the loss degree.

13. The method according to claim 12, wherein that the second indication information indicates a loss degree comprises:
the second indication information indicates "lossy" or "lossless"; or
the second indication information indicates a distortion degree.

14. The method according to claim 12 or 13, wherein the processing, by the network device, uplink data or to-be-coded downlink data based on the first coding mode and the loss degree comprises:
coding, by the network device, the to-be-coded downlink data based on the first coding mode to obtain coded data; and
encrypting, by the network device, the coded data.

15. The method according to claim 14, wherein the encrypting, by the network device, the coded data comprises:
encrypting, by the network device, the to-be-coded downlink data when the to-be-coded downlink data is physical-layer native data of the network device, or when the to-be-coded downlink data is from an upper layer of a physical layer of the network device, and an encryption function of a packet data convergence protocol PDCP layer is not enabled.

16. The method according to claim 15, wherein the method further comprises:
receiving, by the physical layer of the network device, sixth indication information from the upper layer, wherein the sixth indication information indicates to enable an encryption function of the physical layer, or the sixth indication information indicates that the encryption function of the PDCP layer is not enabled.

17. The method according to any one of claims 14 to 16, wherein when the second indication information indicates "lossy" or the distortion degree, before the coding, by the network device, the to-be-coded downlink data based on the first coding mode to obtain coded data, the method further comprises:
performing, by the network device, an interleaving operation on bits of the to-be-coded downlink data.

18. The method according to any one of claims 12 to 17, wherein the sending, by the network device, second indication information comprises:
sending, by the network device, a first MCS index, wherein the first MCS index is used to determine a first transmission configuration, and the first transmission configuration comprises the second indication information.

19. The method according to claim 18, wherein the first transmission configuration further comprises a retransmission number threshold, and the retransmission number threshold is associated with the first MCS index; and
the processing, by the network device, uplink data or to-be-coded downlink data based on the first coding mode and the loss degree comprises:
receiving, by the network device, the uplink data or sending the to-be-coded downlink data based on the first coding mode, the loss degree, and the retransmission number threshold.

20. The method according to claim 18, wherein the method further comprises:
sending, by the network device, fourth indication information, wherein the fourth indication information indicates a retransmission number threshold; and
the processing, by the network device, uplink data or to-be-coded downlink data based on the first coding mode and the loss degree comprises:
receiving, by the network device, the uplink data or sending the to-be-coded downlink data based on the first coding mode, the loss degree, and the retransmission number threshold.

21. The method according to any one of claims 12 to 20, wherein the method further comprises:
obtaining, by the network device, a bit probability distribution of the downlink data or a bit probability distribution of the to-be-coded uplink data; and
determining, by the network device, the first coding mode based on the bit probability distribution.

22. The method according to claim 21, wherein the obtaining, by the network device, a bit probability distribution of the to-be-coded uplink data comprises:
receiving, by the network device, fifth indication information, wherein the fifth indication information indicates the bit probability distribution of the to-be-coded uplink data.

23. The method according to claim 21 or 22, wherein the determining, by the network device, the first coding mode based on the bit probability distribution comprises:
determining, by the network device, the first coding mode based on the bit probability distribution and a length of the to-be-coded downlink data.

24. A communication apparatus, comprising:
a receiving unit, configured to: receive first indication information, wherein the first indication information indicates a first coding mode, and the first coding mode is one of the following coding modes: a channel coding mode, a coding mode in which compression and channel coding are separated, and a coding mode in which compression and channel coding are combined; and
receive second indication information, wherein the second indication information indicates a loss degree; and
a processing unit, configured to process downlink data or to-be-coded uplink data based on the first coding mode and the loss degree.

25. The communication apparatus according to claim 24, wherein that the second indication information indicates a loss degree comprises:
the second indication information indicates "lossy" or "lossless"; or
the second indication information indicates a distortion degree.

26. The communication apparatus according to claim 24 or 25, wherein the processing unit is configured to:
code the to-be-coded uplink data based on the first coding mode to obtain coded data; and
encrypt the coded data.

27. The communication apparatus according to claim 26, wherein the processing unit is configured to:
encrypt the to-be-coded uplink data when the to-be-coded uplink data is physical-layer native data of the communication apparatus, or when the to-be-coded uplink data is from an upper layer of a physical layer of the communication apparatus, and an encryption function of a packet data convergence protocol PDCP layer is not enabled.

28. The communication apparatus according to claim 27, wherein the physical layer of the communication apparatus is configured to receive third indication information from the PDCP layer through the receiving unit, wherein
the third indication information indicates to enable an encryption function of the physical layer, or the third indication information indicates that the encryption function of the PDCP layer is not enabled.

29. The communication apparatus according to any one of claims 26 to 28, wherein the processing unit is configured to perform an interleaving operation on bits of the to-be-coded uplink data before coding the to-be-coded uplink data based on the first coding mode to obtain the coded data.

30. The communication apparatus according to any one of claims 24 to 29, wherein the receiving unit is configured to:
receive a first MCS index, wherein the first MCS index is used to determine a first transmission configuration, and the first transmission configuration comprises the second indication information.

31. The communication apparatus according to claim 30, wherein the first transmission configuration further comprises a retransmission number threshold, and the retransmission number threshold is associated with the first MCS index; and
the processing unit is configured to process the downlink data or the to-be-coded uplink data based on the first coding mode, the loss degree, and the retransmission number threshold.

32. The communication apparatus according to claim 30, wherein the receiving unit is configured to:
receive fourth indication information, wherein the fourth indication information indicates a retransmission number threshold; and
the processing unit is configured to process the downlink data or the to-be-coded uplink data based on the first coding mode, the loss degree, and the retransmission number threshold.

33. The communication apparatus according to any one of claims 24 to 32, wherein the communication apparatus further comprises:
a sending unit, configured to send fifth indication information, wherein the fifth indication information indicates a bit probability distribution of the to-be-coded uplink data, wherein
the first coding mode is determined based on the bit probability distribution.

34. The communication apparatus according to claim 33, wherein that the first coding mode is determined based on the bit probability distribution comprises:
the first coding mode is determined based on the bit probability distribution and a length of the to-be-coded uplink data.

35. A communication apparatus, comprising:
a sending unit, configured to: send first indication information, wherein the first indication information indicates a first coding mode, and the first coding mode is one of the following coding modes: channel coding, a coding mode in which compression and channel coding are separated, and a coding mode in which compression and channel coding are combined; and
send second indication information, wherein the second indication information indicates a loss degree; and
a processing unit, configured to process uplink data or to-be-coded downlink data based on the first coding mode and the loss degree.

36. The communication apparatus according to claim 35, wherein that the second indication information indicates a loss degree comprises:
the second indication information indicates "lossy" or "lossless"; or
the second indication information indicates a distortion degree.

37. The communication apparatus according to claim 35 or 36, wherein the processing unit is configured to:
code the to-be-coded downlink data based on the first coding mode to obtain coded data; and
encrypt the coded data.

38. The communication apparatus according to claim 37, wherein the processing unit is configured to:
encrypt the to-be-coded downlink data when the to-be-coded downlink data is physical-layer native data of the communication apparatus, or when the to-be-coded downlink data is from an upper layer of a physical layer of the communication apparatus, and an encryption function of a packet data convergence protocol PDCP layer is not enabled.

39. The communication apparatus according to claim 38, wherein the communication apparatus further comprises a receiving unit, and the physical layer of the communication apparatus receives sixth indication information from the upper layer through the receiving unit, wherein
the sixth indication information indicates to enable an encryption function of the physical layer, or the sixth indication information indicates that the encryption function of the PDCP layer is not enabled.

40. The communication apparatus according to claim 38, wherein the processing unit is further configured to:
perform an interleaving operation on bits of the to-be-coded downlink data before coding the to-be-coded downlink data based on the first coding mode to obtain the coded data.

41. The communication apparatus according to any one of claims 35 to 40, wherein the sending unit is further configured to:
send a first MCS index, wherein the first MCS index is used to determine a first transmission configuration, and the first transmission configuration comprises the second indication information.

42. The communication apparatus according to claim 41, wherein the first transmission configuration further comprises a retransmission number threshold, and the retransmission number threshold is associated with the first MCS index; and
the processing unit is configured to process the uplink data or the to-be-coded downlink data based on the first coding mode, the loss degree, and the retransmission number threshold.

43. The communication apparatus according to claim 41, wherein the sending unit is further configured to send fourth indication information, wherein the fourth indication information indicates a retransmission number threshold; and
the processing unit is configured to process the uplink data or the to-be-coded downlink data based on the first coding mode, the loss degree, and the retransmission number threshold.

44. The communication apparatus according to any one of claims 35 to 43, wherein the processing unit is configured to:
obtain a bit probability distribution of the downlink data or a bit probability distribution of the to-be-coded uplink data; and
determine the first coding mode based on the bit probability distribution.

45. The communication apparatus according to claim 44, wherein the communication apparatus further comprises:
the receiving unit, configured to receive fifth indication information, wherein the fifth indication information indicates the bit probability distribution of the to-be-coded uplink data.

46. The communication apparatus according to claim 45, wherein the processing unit is configured to:
determine the first coding mode based on the bit probability distribution and a length of the to-be-coded downlink data.

47. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 11 or the method according to any one of claims 12 to 23.

48. A chip, comprising a processor and a communication interface, wherein the communication interface is configured to: receive data and/or information, and transmit the received data and/or information to the processor, and the processor processes the data and/or the information according to the method according to any one of claims 1 to 11.

49. A chip, comprising a processor and a communication interface, wherein the processor processes to-be-sent data and/or information according to the method according to any one of claims 12 to 23, and the communication interface is configured to send processed data and/or information.

50. A computer-readable storage medium, wherein the computer-readable storage medium stores computer instructions, and when the computer instructions are run on a computer, the method according to any one of claims 1 to 11 or the method according to any one of claims 12 to 23 is implemented.

51. A computer program product, wherein the computer program product comprises computer program code, and when the computer program code is run on a computer, the method according to any one of claims 1 to 11 or the method according to any one of claims 12 to 23 is implemented.

52. A communication system, comprising a terminal device and a network device, wherein the terminal device is configured to perform the method according to any one of claims 1 to 11, and the network device is configured to perform the method according to any one of claims 12 to 23.
